# EUROPEAN PATENT SPECIFICATION

(11) **EP 4 698 811 B1**
(45) Date of publication and mention of the grant of the patent: **20.05.2026**
(21) Application number: 25711825.7
(22) Date of filing: 04.03.2025
(51) Int. Cl.: F16L 1/028, F16L 59/02, F16L 59/14, F16L 59/15, F16L 55/168, F16L 58/12, F16L 58/16, B08B 9/023

(54) **A METHOD FOR RESTORATION OF A PIPELINE INSULATION**
VERFAHREN ZUR WIEDERHERSTELLUNG EINER ROHRLEITUNGSISOLIERUNG
PROCÉDÉ DE RESTAURATION D'UNE ISOLATION DE PIPELINE

(30) Priority: 10.09.2024 LV 240053
(43) Date of publication of application: 25.02.2026
(73) Proprietor: "KR15T5" UNIPESSOAL LDA FILIALE, 2167 Marupe, Marupes nov. (LV)
(72) Inventor: KRUMPANS, Krists, 2167 Marupe, Marupes nov. (LV)
(74) Representative: Kromanis, Artis
(86) International application number: PCT/LV2025/050005
(87) International publication number: WO 2025/116718

(56) References cited:
- RU-C1- 2 289 061
- RU-C1- 2 325 585
- SU-A1- 1 659 945
- US-A- 5 871 034

## Description

### Field of the invention

The present invention relates to a method for restoration of an insulation of a gas pipelines, in particular restoration of an insulation of a gas pipelines buried into a ground.

### Background of the invention

There are some known methods of re-insulating pipelines. German patent application publication No. DE4404473 discloses a method of pipeline restoration, wherein the pipeline is cleaned with ultrasound and the insulation is restored with a viscous synthetic material containing glass fibre particles. Similar method of restoring pipelines is outlined in International Patent Application Publication No. WO9808019.

The patent publication No. RU2325585 discloses a method for restoring pipelines that transport gas or liquid. This method includes cleaning of external pipeline surface from old coating and rust, applying a layer of primer on pipeline external surface, spiral winding of insulating anticorrosive material with overlapping on layer of primer and spiral winding with overlapping of wrapping external layer of polymer tape on layer of insulating anticorrosive material.

Aforementioned pipeline insulation restoration methods require the use of many and different materials, which complicates the restoration and makes the pipeline re-insulation process more expensive. Accordingly, the aim of the invention is to create a technology for the re-insulation of pipelines, in particular gas pipelines, which is simple to implement, i.e. not too labour-intensive, and at the same time is able to provide all the necessary insulation functions, i.e. provides corrosion resistance and protection against mechanical damage.

### Summary of the invention

The aim of the invention is achieved by development a method for restoring the insulation of a gas pipeline buried in the ground, where the method includes certain steps described below.

The first step of the method is to dig up the gas pipeline with the old insulation, which is followed by removing the old insulation from the gas pipeline. The removal of the old insulation can be performed by means of mechanical processing already known to the skilled person.

Once the old insulation has been removed, the gas pipeline is cleaned with mechanical processing means selected from the group comprising sand blasting, dry ice cleaning and high-pressure water jet cleaning. Cleaning is carried out until the degree of cleanliness of the outer surface of the gas pipeline is reached, which is not lower than ST/SA2 according to ISO 8501-1 or even ST2/ SA2½ according to ISO 8501-1. The degree of cleanliness depends on the requirements set for the cleanliness of the outer surface of the gas pipeline. Once the step of cleaning the outer surface of the gas pipeline is completed, the steps of re-insulating the gas pipeline can follow.

The restoration of the gas pipeline insulation begins with heating the gas pipeline to be insulated until the temperature of the external surface of the gas pipeline is between 55 and 80 degrees Celsius. Heating can be performed by forced heat supply or by keeping the gas pipeline in the sun until the mentioned temperature range is reached, which can be followed by application of a primer onto the outer surface of the gas pipeline. This heating is an essential step to ensure not only a good adhesion of the primer, but also the subsequent application of the bitumen layer, i.e. its adhesion to the gas pipeline to be insulated. Accordingly, the next step is the application of primer onto the outer surface of the gas pipeline. The primer itself may be made of gasoline, which serves as a solvent, and additionally contains butyl rubber, as well as resins for adhesion. Any other pipeline primer known to a person skilled in the art can also be used as a primer, for example a bitumen-based primer. In addition, the application of the primer can be performed by applying the primer onto the gas pipeline from 0.15 to 0.3 1/m2. After the primer is applied to the gas pipeline and it dries, the next step is the application of bitumen.

The bitumen is applied to the outer surface of the primed gas pipeline until the entire outer surface of the gas pipeline is covered with a layer of bitumen. The thickness of the applied bitumen layer is between 4 and 12 mm. During the application of the bitumen layer, it is thermally affected, thus reducing its viscosity, as a result of which the adhesion of the bitumen to the pipe is improved. The previously performed heating step also facilitates the application of the bitumen layer, as less thermal exposure is required during application of the bitumen layer.

The application of the bitumen layer is followed by covering the bituminous gas pipeline with mechanical protection means selected from the group comprising butyl rubber tape, geotextile fabric and polymer tape, such as polyethylene tape. In one of the embodiments of the invention, the bitumen application can be performed with a bitumen tape, which is wound on the gas pipeline in one layer with a tape overlapping of 20 to 50 mm. In another embodiment of the invention, the application of bitumen can be implemented with a bitumen tape, which is reinforced, i.e. embedded with fiberglass fabric. In addition, the fiberglass fabric is embedded in the bitumen tape in such a way that the fiberglass fabric is located closer to the side of the bitumen tape surface that is farthest from the gas pipe. Thus, the embedded fiberglass cloth is not in the middle of the bitumen tape, but with an offset closer to the outer surface of the bitumen tape. In yet another embodiment of the invention, bitumen application can be implemented with bitumen tape, which is wound in two layers, where the second layer of bitumen tape is wound alternately in relation to the first layer of bitumen tape.

The gas pipeline restored according to the aforementioned method, which includes the initial heating of the gas pipeline to a certain temperature, followed by its priming and the application of a bitumen layer followed by wrapping a protective layer, ensures that the safe operation of the gas pipeline is achieved for at least the next 40 years. Thus, the operation of the gas pipeline is ensured with a guarantee, which is usually determined up to 30-35 years.

It should be noted that the application of the bitumen layer is followed by an inspection of the insulation of the bitumen layer with an electrospark defectoscope. This is an additional quality control step to ensure the correctness and durability of the applied bitumen layer.

The method described above makes it possible to create a technology for restoring the insulation of pipelines, especially gas pipelines, which is simple to implement, i.e. not too labour-intensive, and at the same time is able to provide all the necessary insulation functions, i.e. provides corrosion resistance and protection against mechanical damage. And, of course, it also provides extended service life.

### Brief description of the drawings

The drawing illustrates through example one embodiment of the invention falling within the scope of the invention as defined by the claims.

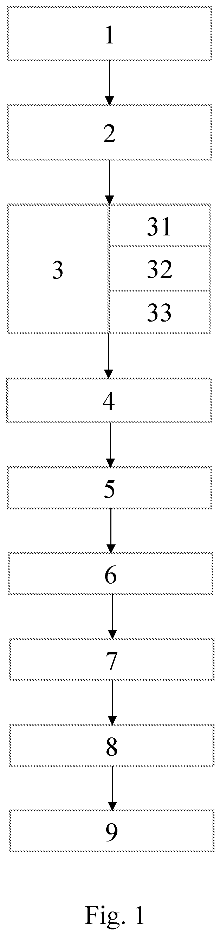

Fig. 1 illustrates a flowchart of the method for restoration of the insulation of a gas pipeline.

### Detailed description of the embodiments

The embodiment of the invention is described with reference to figure to illustrate the objectives, the advantages and efficiency of the present invention.

Fig. 1 is a flowchart outlining a method for re-insulating a buried gas pipeline. The method begins with the excavation (1) of the gas pipeline with an old insulation to be renewed, followed by a removal (2) of the old insulation from the gas pipeline. Next comes the cleaning (3) of the gas pipeline with means of mechanical processing. The cleaning (3) is performed by sand blasting (31), dry ice cleaning (32) and high-pressure water jet cleaning (33). The cleaning (3) is performed until the degree of cleanliness of the outer surface of the gas pipeline is reached, which is not lower than ST/SA2 according to ISO 8501-1. The next step is heating (4) of the gas pipeline to be re-insulated until the temperature of the outer surface of the gas pipeline is between 55 and 80 degrees Celsius. The heating (4) is performed with a heated air blower. This is followed by a primer application (5) on the outer surface of the gas pipeline, which facilitates the next step of the method, which is a bitumen application (6) on the outer surface of the primed gas pipeline until the entire outer surface of the gas pipeline is covered with a layer of bitumen, and the thickness of the bitumen layer is in the range of 4 to 12 mm. In addition, the bitumen application (6) is performed with a bitumen tape, which is heated and wound on the gas pipe in one layer with a tape overlap of 25 to 35 mm. The width of the tape itself is 100 mm, but as an alternative, a bitumen tape with a width of 75 to 275 mm can be used. In addition, the bitumen tape is reinforced with fiberglass fabric. After bitumen application (6), the insulation test (7) of the bitumen layer is performed by a spark electrospark defectoscope. In a result of a successful insulation test (7) of the bitumen layer, the bitumen-covered gas pipeline is covered (8) with a polyethylene film in the form of a tape and buried (9).

The invention is not intended to be limited to the particular forms disclosed herein. Rather, the invention includes all the modifications, equivalents and alternatives as long as they fall within the scope of the claims.

## Claims

1. A method for restoring the insulation of a gas pipeline buried in the ground, wherein the method comprises the following steps:
- excavation of the gas pipeline (1) with an old insulation;
- removing the old insulation (2) from the gas pipeline;
- cleaning (3) the gas pipeline with means of mechanical processing selected from the group comprising sand blasting (31), dry ice cleaning (32) and high-pressure water jet cleaning (33);
- heating (4) of the gas pipeline to be insulated until the temperature of the external surface of the gas pipeline is in the range of 55 to 80 degrees Celsius, wherein the heating is performed by forced heat supply or by keeping the gas pipeline in the sun until said temperature range is reached;
- primer application (5) onto the outer surface of the gas pipeline;
- bitumen application (6) on the outer surface of the primed gas pipeline until the entire outer surface of the gas pipeline is covered with a layer of bitumen, wherein the thickness of the bitumen layer is within 4 to 12 mm, and wherein during the bitumen application (6), the bitumen layer is heated;
- inspection (7) of the bitumen layer insulation with an electrospark defectoscope;
- covering (8) the bituminous gas pipeline with mechanical protection means selected from the group comprising a butyl rubber tape, geotextile fabric and polymer tape, such as polyethylene tape; and
- burying (9) the gas pipeline with renewed insulation.

2. The method according to claim 1, wherein the bitumen application (6) is performed with a bitumen tape, which is wound on the gas pipeline in one layer with a tape overlapping of 20 to 50 mm.

3. The method according to claim 1 or 2, wherein the bitumen application (6) is performed with the bitumen tape reinforced with fiberglass fabric.

4. The method according to claim 3, wherein the fiberglass fabric is embedded in the bitumen tape so that the fiberglass fabric is closer to the side of the surface of the bitumen tape that is furthest from the gas pipeline.

5. The method according to any one of claims 1 to 4, wherein the primer application (5) is carried out so that the primer is applied onto the gas pipeline from 0.15 to 0.3 1/m2.

6. The method according to claim 1 or any of claims 3 to 5, wherein the bitumen application (6) is performed with the bitumen tape, which is wound in two layers, wherein the second layer of the bitumen tape is wound alternately in relation to the first layer of the bitumen tape.

## Patentansprüche

1. Verfahren zur Wiederherstellung der Isolierung einer im Boden verlegten Gasleitung, wobei das Verfahren die folgenden Schritte umfasst:
- Freilegung der Gasleitung (1) mit einer alten Isolierung;
- Entfernen der alten Isolierung (2) von der Gasleitung;
- Reinigen (3) der Gasleitung mit Hilfe mechanischer Verfahren, ausgewählt aus der Gruppe bestehend aus Sandstrahlen (31), Trockeneisreinigung (32) und Hochdruck-Wasserstrahlreinigung (33);
- Erwärmung (4) der zu isolierenden Gasleitung, bis die Temperatur der Außenfläche der Gasleitung im Bereich von 55 bis 80 Grad Celsius liegt, wobei die Erwärmung durch eine erzwungene Wärmezufuhr oder durch Aufbewahrung der Gasleitung in der Sonne erfolgt, bis der genannte Temperaturbereich erreicht ist;
- Auftragen einer Grundierung (5) auf die Außenfläche der Gasleitung;
- Auftragen von Bitumen (6) auf die Außenfläche der grundierten Gasleitung, bis die gesamte Außenfläche der Gasleitung mit einer Bitumenschicht bedeckt ist, wobei die Dicke der Bitumenschicht zwischen 4 und 12 mm liegt und wobei während des Aufbringens des Bitumens (6) die Bitumenschicht erwärmt wird;
- Prüfung (7) der Bitumen-Isolationsschicht mit einem Elektrofunken-Defektoskop;
- Abdecken (8) der bituminierten Gasleitung mit mechanischen Schutzvorrichtungen, ausgewählt aus der Gruppe bestehend aus einem Butylkautschukband, einem Geotextilgewebe und einem Polymerband, wie beispielsweise einem Polyethylenband; und
- Vergraben (9) der Gasleitung mit erneuter Isolierung.

2. Verfahren nach Anspruch 1, wobei das Aufbringen des Bitumens (6) mit einem Bitumenband erfolgt, das in einer Lage mit einer Überlappung von 20 bis 50 mm auf die Gasleitung gewickelt wird.

3. Verfahren nach Anspruch 1 oder 2, wobei das Aufbringen des Bitumens (6) mit einem mit Glasfasergewebe verstärkten Bitumenband erfolgt.

4. Verfahren nach Anspruch 3, wobei das Glasfasergewebe so in das Bitumenband eingebettet ist, dass sich das Glasfasergewebe näher an der Seite der Oberfläche des Bitumenbandes befindet, die am weitesten von der Gasleitung entfernt ist.

5. Verfahren nach einem der Ansprüche 1 bis 4, wobei der Grundierauftrag (5) so durchgeführt wird, dass die Grundierung in einer Menge von 0,15 bis 0,3 1/m² auf die Gasleitung aufgetragen wird.

6. Verfahren nach Anspruch 1 oder einem der Ansprüche 3 bis 5, wobei der Bitumenauftrag (6) mit dem Bitumenband erfolgt, das in zwei Lagen gewickelt ist, wobei die zweite Lage des Bitumenbands versetzt zur ersten Lage des Bitumenbands gewickelt ist.

## Revendications

1. Procédé de remise en état de l'isolation d'un gazoduc enterré, **caractérisé en ce qu'**il comprend les étapes suivantes:
- mise à nu du gazoduc (1) muni d'une ancienne isolation;
- retrait de l'ancienne isolation (2) de la canalisation de gaz;
- nettoyage (3) de la canalisation de gaz à l'aide de procédés mécaniques choisis parmi le groupe comprenant le sablage (31), le nettoyage à la glace carbonique (32) et le nettoyage au jet d'eau à haute pression (33);
- chauffage (4) de la conduite de gaz à isoler jusqu'à ce que la température de la surface externe de la conduite de gaz se situe dans la plage de 55 à 80 degrés Celsius, le chauffage étant effectué par apport de chaleur forcé ou en exposant la conduite de gaz au soleil jusqu'à ce que ladite plage de température soit atteinte;
- application d'un apprêt (5) sur la surface externe de la conduite de gaz;
- application de bitume (6) sur la surface extérieure de la canalisation de gaz apprêtée jusqu'à ce que toute la surface extérieure de la canalisation de gaz soit recouverte d'une couche de bitume, l'épaisseur de la couche de bitume étant comprise entre 4 et 12 mm, et la couche de bitume étant chauffée pendant l'application de bitume (6);
- inspection (7) de l'isolation de la couche de bitume à l'aide d'un détecteur de défauts à étincelles électriques;
- recouvrement (8) du gazoduc bitumé à l'aide de moyens de protection mécanique choisis parmi le groupe comprenant un ruban de caoutchouc butyle, un tissu géotextile et un ruban polymère, tel qu'un ruban de polyéthylène; et
- enfouissement (9) du gazoduc avec une isolation renouvelée.

2. Procédé selon la revendication 1, dans lequel l'application de bitume (6) est réalisée à l'aide d'un ruban de bitume, qui est enroulé sur le gazoduc en une seule couche avec un chevauchement de ruban de 20 à 50 mm.

3. Procédé selon la revendication 1 ou 2, dans lequel l'application de bitume (6) est réalisée à l'aide du ruban de bitume renforcé par un tissu en fibre de verre.

4. Procédé selon la revendication 3, dans lequel le tissu en fibre de verre est intégré dans le ruban de bitume de telle sorte que le tissu en fibre de verre se trouve plus près du côté de la surface du ruban de bitume qui est le plus éloigné de la conduite de gaz.

5. Procédé selon l'une quelconque des revendications 1 à 4, dans lequel l'application de l'apprêt (5) est effectuée de telle sorte que l'apprêt soit appliqué sur le gazoduc à raison de 0,15 à 0,3 1/m2.

6. Procédé selon la revendication 1 ou l'une quelconque des revendications 3 à 5, dans lequel l'application de bitume (6) est effectuée à l'aide du ruban bitumineux, qui est enroulé en deux couches, la deuxième couche du ruban bitumineux étant enroulée en alternance par rapport à la première couche du ruban bitumineux.
